# EUROPEAN PATENT SPECIFICATION

(11) **EP 3 697 698 B1**
(45) Date of publication and mention of the grant of the patent: **11.01.2023**
(21) Application number: 18793019.3
(22) Date of filing: 12.10.2018
(51) Int. Cl.: B65D 5/54, B65D 5/02, B65D 5/42

(54) **WRAP AROUND PACKAGE**
HÜLLENFÖRMIGE VERPACKUNG
EMBALLAGE DE TYPE FOURREAU

(30) Priority: 17.10.2017 SE 1751285
(43) Date of publication of application: 26.08.2020
(73) Proprietor: Stora Enso Oyj, 00101 Helsinki (FI)
(72) Inventor: LIBEKS, Girts, 5113 Koknese (LV)
(74) Representative: Steinrud, Henrik
(86) International application number: PCT/IB2018/057923
(87) International publication number: WO 2019/077456

(56) References cited:
- WO-A1-2014/205427
- DE-U1-202016 003 911
- US-A1- 2011 098 167
- US-A1- 2014 042 216

## Description

### Field of invention

The invention relates to a wrap around package.

### Technical Background

It is well known to transport, store and present products in display boxes which are provided one on top of the other on a pallet. The display boxes are typically provided by folding a flat blank into a box comprising a horizontal bottom wall and four vertical side walls. The display box is filled with its intended contents from above via a top opening and then closed by a separate lid or by folding flaps of the blank to thereby form a top wall. The resulting boxes may be stacked one on top of the other on pallet. To allow transportation and handling of the pallet, the stack of boxes and the pallet is typically wrapped with stretch foil or by straps.

As the display boxes are provided to the store, the display boxes may either be presented one by one on a shelf or be handled as a column on the pallet which is rolled out to the store. No matter if the display boxes are handled one by one or as a column, the contents must be presented to the end consumer. This is typically made by removing at least a portion of one of the wall portions, such as a portion of the front wall. The removal may be made by tearing along a perforation or by cutting using a knife or a pair of scissors.

Since the display boxes are used to present the contents to the end consumer in a visually attracting condition, it is essential that the operator does not destroy the edges of the display opening to be formed. Also, in case of a column with several display boxes this may require some skills to not injure adjacent boxes and in the worst case scenario the contents.

Another factor of perhaps even higher importance is the structural rigidity. The display box must be robust enough to allow stacking and also to withstand impacts and vibrations during transportation. Thus, the display box must allow wrapping and/or tensioning of straps. Also, it must be able to withstand weight from a certain number of similar display boxes without collapsing. One common measure is to provide the erected and filled box with a lid which as such provides a top wall but which also strives to maintain the folded geometry of the box when subjected to a compression force. The use of a lid is however not favourable since it adds to the amount of waste material, adds weigh during transportation and also adds to the overall cost of the product to be displayed.

DE 20 2016 003911 U1 discloses a wrap around package which is provided with openings in a front wall and a side wall and which is provided with tear lines defining a T-shaped removable portion, such that a complete corner piece and top portion may be removed to provide a display configuration of the wrap around package.

US 2014/042216 A1 discloses a wrap around package which is formed with closed front and top walls and which is provided with a removable portion extending over both a portion of the front wall and portion of the top wall.

### Summary of invention

It is an object of the invention to mitigate, alleviate or eliminate one or more of the above-identified deficiencies in the art and disadvantages singly or in any combination and solve at least the above mentioned problems.

One specific object of the invention is to provide a wrap around package that can be used for display purposes and that can be stacked one on top of the other on a pallet and then be transported as one single unit.

Another object is to provide a wrap around package that is easy to handle during erection and filling.

Yet another object is to provide a wrap around package that has a high degree of robustness which is provided by the inherent design while at the same time reducing the amount of packaging material.

As yet another object the wrap around package should require a minimum of hands-on work to present the contents to an end consumer.

These objects have been addressed by a wrap around package according to claim 1. The wrap around package is formed of a blank comprising four major panels connected one after another along a first direction, wherein the four major panels are foldable relative to each other about fold lines extending transverse to the first direction in order to form a bottom wall panel, a back wall panel, a top wall panel and a front wall panel configured to form a bottom wall, a back wall, a top wall and a front wall, respectively, of the wrap around package,
wherein each of the four major panels is provided with a first attachment flap on a first transverse side edge of the respective major panel and a second attachment flap on a second transverse side, opposite the first side edge, of the respective major panel,
wherein each attachment flap is foldable relative to the respective major panel about a respective fold line extending along the first direction,
wherein each first attachment flap of a respective major panel is configured to partly overlap and be attached to the first attachment flaps of the respective two neighbouring major panels,
wherein each second attachment flap of a respective major panel is configured to partly overlap and be attached to the second attachment flaps of the respective two neighbouring major panels,
wherein the major panel configured to form the front wall panel of the wrap around package is provided with a left hand rim portion extending from the top wall panel to the bottom wall panel, a right hand rim portion extending from the top wall panel to the bottom wall panel, and a lower rim portion extending along the bottom wall panel and extending from the left hand rim portion to the right hand rim portion, wherein the left hand rim portion, the lower rim portion and the right hand rim portion together form a front wall rim defining a through-going opening in the front wall panel, and
wherein the major panel configured to form the top wall panel of the wrap around package is provided with a left hand rim portion extending from the back wall panel to the front wall panel, a right hand rim portion extending from the back wall panel to the front wall panel, and a rear rim portion extending along the back wall panel and extending from the left hand rim portion to the right hand rim portion, wherein the left hand rim portion, the rear rim portion and the right hand rim portion together form a top wall rim defining a through-going opening in the top wall panel.

The wrap around package is characterised in that the major panel configured to form the front wall panel further comprises a removable upper rim portion extending from a left hand tear line formed in an interface between the removable upper rim portion and the left hand rim portion to a right hand tear line formed in an interface between the upper rim portion and the right hand rim portion of the front wall panel,
wherein the upper rim portion forms part of the front wall rim defining the through-going opening in the front wall panel and is configured to be removed to form a single through-going opening in the front wall and the top wall, and/or
the major panel configured to form the top wall panel further comprises a removable forward rim portion extending from a left hand tear line formed in an interface between the forward rim portion and the left hand rim portion to a right hand tear line formed in an interface between the forward rim portion and the right hand rim portion of the top wall panel,
wherein the forward rim portion forms part of the top wall rim defining the through-going opening in the top wall panel and is configured to be removed to form said/a single through-going opening in the front wall and the top wall.

A wrap around package is hence provided that allows an overall robustness allowing stacking and handling on a pallet, through the full chain from forming, filling, stacking, transportation and presentation to the end consumer. By the package being of the wrap around type, the handling of the package in the erecting and filling stage is greatly facilitated since there, as compared to a package of the folded type, is no need to fold the blank to erect a box-like container which may be filled with its contents before closing. Also, when the wrap around package arrives its final destination, such as a store, there is no need for cutting or tearing-off material and thus generating waste material. Also, when the package is empty, it is easy to flatten the package. This is allowed by tearing one single joint, typically provided by adhesive, as compared to packages of the folded type where a number of flaps must be unfolded. Additionally, the rims forming the through-going openings contribute to the robustness allowing stacking/handling, but also provision of a visually appearing through-going openings in the front wall panel and the top wall panel. The through-going openings form display and access openings.

The upper rim portion has in the wrap around package an extension transverse the package between the attachment flaps, which flaps form side walls in the wrap around package. The upper rim portion will thereby contribute to the overall reinforcement of the wrap around package during handling and when being stacked one on top of the other on a pallet. Especially the torsional rigidity of the wrap around package will be improved.

The forward rim portion has in the wrap around package an extension transverse the package between the attachment flaps, which flaps form side walls in the wrap around package. The forward rim portion will thereby contribute to the overall reinforcement of the wrap around package during handling and when being stacked one on top of the other on a pallet. Especially the torsional rigidity of the wrap around package will be improved.

The upper rim portion of the front wall and the forward rim portion of the top wall may be interconnected, and preferably integrally formed, along a fold line between the front wall panel and the top wall panel.

The attachment flaps of the top wall panel and the attachment flaps of the bottom wall panel may have a respective length, along the transverse direction in an unfolded state, such that there is no overlap of the attachment flaps of the top wall panel and the attachment flaps of the bottom wall panel.

By no overlap, the material consumption is reduced. Also, the two edges facing each other will be arranged in the same level with reduced risk of entanglement with e.g. adjacent packages. Also the risk of inherent tensions in any adhesively joined overlap joints that may cause a rupture due to peeling forces is reduced.

The attachment flaps of the front wall panel and the attachment flaps of the back wall panel may have a respective length, along the transverse direction in an unfolded state, such that there is no overlap of the attachment flaps of the front wall panel and the attachment flaps of the back wall panel.

By no overlap, the material consumption is reduced and also there is no risk of inherent tensions in any overlap joints that may cause a rupture. Also, the two edges facing each other will be arranged in the same level with reduced risk of entanglement with e.g. adjacent packages.

The blank may further comprise an attachment panel arranged to extend in line with the four major panels along the first direction. The attachment panel may be arranged to provide an overlap joint that is used to interconnect the four major panels by e.g. adhesive or stapling to maintain the wrapped geometry. A fold line may be arranged transverse the first direction in the interface between the attachment panel and the adjacent major panel. The attachment panel is arranged as a first or a last panel in the row of major panels making up the blank.

Other objectives, features and advantages of the present invention will appear from the following detailed disclosure, from the attached claims, as well as from the drawings. It is noted that the invention relates to all possible combinations of features as defined in the appended claims.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise.

As used herein, the term "comprising" and variations of that term are not intended to exclude other additives, components, integers or steps.

### Brief description of the drawings

The above, as well as additional objects, features and advantages of the present invention, will be better understood through the following illustrative and non-limiting detailed description of embodiments of the present invention, with reference to the appended drawings, where the same reference numerals may be used for similar elements.
Fig. 1 discloses one embodiment of a blank for the forming of the wrap around package.
Fig. 2 discloses a wrap around package formed by wrapping the blank of Fig. 1
Fig. 3 discloses the possibility of a removal of a rim-portion of the top and front wall to form a single through-going opening.
Fig. 4 discloses two stacks of wrap around packages with a single respective two through-going openings.

### Detailed description of preferred embodiments

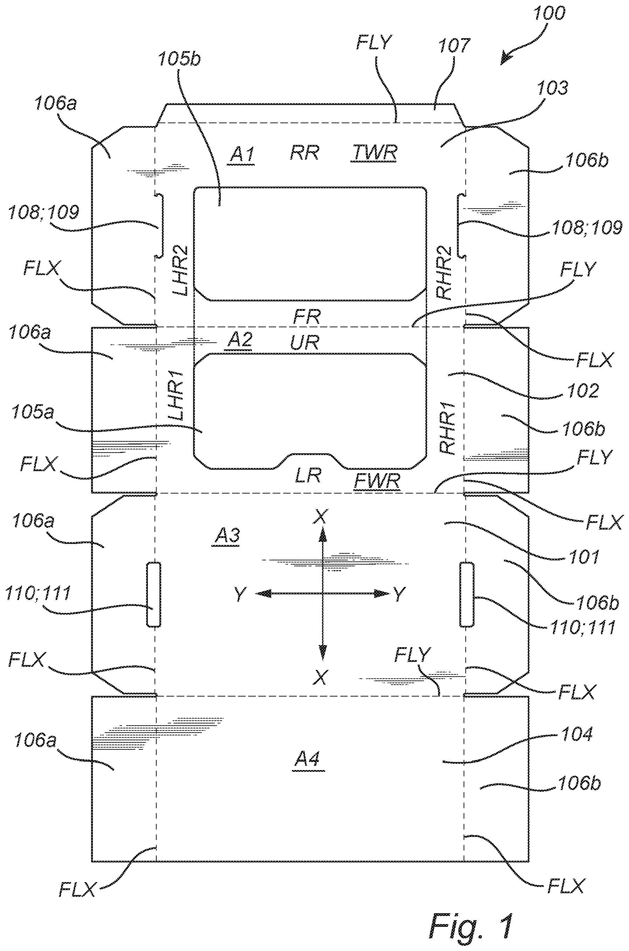

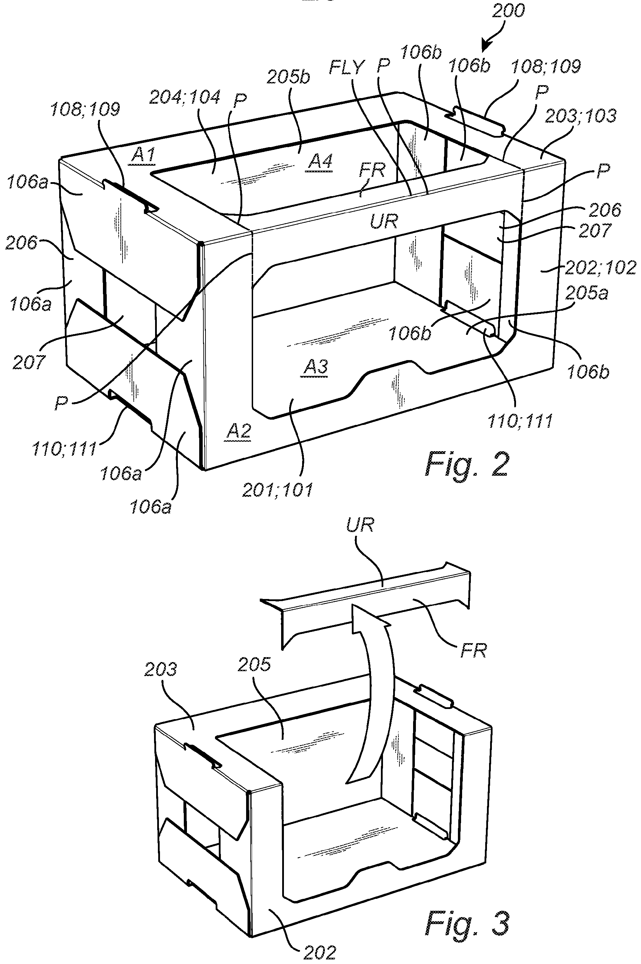

Referring to Fig.1, one embodiment of a blank 100 is disclosed. The blank 100 is arranged to form a wrap around package 200 of the type disclosed in Fig. 2.

The wrap around package 200, best seen in Fig. 2 has a box shape comprising a bottom wall 201, a front wall 202, a top wall 203 and a back wall 204. The front wall 202 comprises a through-going opening 205a and the top wall 203 comprises a through-going opening 205b. The wrap around package 200 further comprises two opposite side walls 206. While the bottom wall 201, the front wall 202, the top wall 203 and the back wall 204 are formed by one panel each, the side walls 206 are each formed by four attachment panels 106a; 106b to be discussed below. The wrap around package 200 may be used as a display package.

Now turning to Fig. 1, the blank 100, which is formed as a unitary piece will be discussed. As non-limiting examples, the blank 100 may be provided by e.g. paperboard, cardboard or corrugated cardboard.

The blank 100 comprises four major panels A1-A4 connected one after another along a first direction X. The four major panels A1-A4 are foldable relative to each other about fold lines FLY extending in a second direction Y transverse to the first direction X in order to form a bottom wall panel 101, a back wall panel 104, a top wall panel 103 and a front wall panel 102 of the wrap around package 200 to be formed by the blank 100.

The blank 100 further comprises a fifth, optional, attachment panel 107. The attachment panel 107 is arranged either as a first or a last panel as seen along the first direction X. In the disclosed embodiment, the attachment panel 107 is arranged adjacent the major panel A1 intended to form the top wall panel 103. It is to be understood that a fold line FLY extends in the transverse second direction Y between the attachment panel 107 and the adjacent major panel which in the illustrated embodiment is the top wall panel 103.

In case the blank 100 comprises an attachment panel 107 arranged as a last panel in the blank 100, such attachment panel 107 may be configured to be sealingly attached, i.e. interconnected to the first major panel of the blank 100 when folding the blank 100 to form the wrap around package 200. In the blank 100 disclosed in Fig.1, this implies that the attachment panel 107 is configured to be sealingly attached to the back wall panel 104. The attachment may be made by adhesive, staples or adhesive tape.

Each of the four major panels A1-A4 is provided with a first attachment flap 106a on a first side edge of the respective major panel A1-A4 and a second attachment flap 106b on a second side of respective major panel A1-A4.

Each attachment flap 106a, 106b is foldable relative to the respective major panel A1-A4 about a respective fold line FLX extending along the first direction X. The attachment flaps 106a, 106b are arranged to form the side walls 206 in the wrap around package 200 to be formed by the blank 100, see Fig. 2.

The fold lines FLX, FLY in the blank 100 may be formed e.g. as creasing lines, perforations or intermittent cut-outs.

The major panel A2 configured to form the front wall 202 of the wrap around package 200 is provided with a left hand rim portion LHR1 extending from the top wall panel 103 to the bottom wall panel 101, a right hand rim portion RHR1 extending from the top wall panel 103 to the bottom wall panel 101, and a lower rim portion LR extending along the bottom wall panel 101 and extending from the left hand rim portion LHR1 to the right hand rim portion RHR1. Also, the front wall panel 102 comprises an optional upper rim portion UR extending from the left hand rim portion LHR1 to the right hand rim portion RHR1. The left hand rim portion LHR1, the lower rim portion LR and the right hand rim portion RHR1 together form a front wall rim FWR defining a through-going opening 105a in the front wall panel 102. The upper rim portion UR if present forms part of the front wall rim FWR defining a through-going opening 105a in the front wall panel 102. The through-going opening 105a in the blank 100 forms the through-going opening 205a in the front wall 202 in the wrap around package 200.

The major panel A1 configured to form the top wall 203 of the wrap around package 200 is provided with a left hand rim portion LHR2 extending from the back wall panel 104 to the front wall panel 102, a right hand rim portion RHR2 extending from the back wall panel 104 to the front wall panel 102, and a rear rim portion RR extending along the back wall panel 104 and extending from the left hand rim portion LHR2 to the right hand rim portion RHR2. Also, the top wall panel 103 comprises an optional forward rim portion FR extending from the left hand rim portion LHR2 to the right hand rim portion RHR2 of the top wall panel 103. The left hand rim portion LHR2, the rear rim portion RR and the right hand rim portion LHR2 together form a top wall rim TWR defining a through-going opening 105b in the top wall panel 103 and hence the through-going opening 205b in the top wall 203 in the wrap around package 200, see Fig. 2. The forward rim portion FR if present forms part of the top wall rim TWR defining the through-going opening 105b in the top wall panel 103.

The fold line FLY extending between the top wall panel 103 and the front wall panel 102 extends along an interface between the forward rim portion FR of the top wall panel 103 and the upper rim portion UR of the front wall panel 102, and especially between the left hand and right hand rim portions LHR1, LHR2, RHR1, RHR2 of the top wall panel 103 and the front wall panel 102.

The fold lines FLX between the top wall panel 103 and its first and second attachment flaps 106a, 106b may comprise an optional cut-out 108. In the disclosed embodiment the respective cut-out 108 has a U-shape delimiting a tongue 109 that extends into the top wall panel 103.

The fold lines FLX between the bottom wall panel 101 and its first and second attachment flaps 106a, 106b may comprise an optional cut-out 110. In the disclosed embodiment, the respective cut-outs 110 are formed as rectangular through-going holes 111 extending from the bottom wall panel 101 into the respective attachment panels 106a, 106b.

The effect of these cut-outs 108, 110 will be further discussed below.

Now turning to Fig. 2. When folding the blank 100 to form the wrap around package 200, the respective first and second attachment flaps 106a, 106b of respective major panel A1, A3 are configured to partly overlap and be attached to the first and second attachment flaps 106a, 106b of the two neighbouring major panels A2, A4. The attachment may be made by e.g. adhesive, tape or by stapling. Thereby, two opposing side walls 206 are formed in the wrap around package 200.

In the folded condition, the attachment flaps 106a, 106b of the top wall panel 103 and the bottom wall panel 101 will extend towards each other and be in level. Likewise, the attachment flaps 106a, 106b of the front wall panel 102 and the back wall panel 104 respectively will extend towards each other and be in level.

In the disclosed embodiment, the attachment flaps 106a, 106b of the top wall panel 103 and the attachment flaps 106a, 106b of the bottom wall panel 101 have a respective length, as seen along the transverse, second direction Y in an unfolded state, such that there is no overlap between the attachment flaps 106a, 106b of the top wall panel 103 and the attachment flaps 106a, 106b of the bottom wall panel 101. Also, the attachment flaps 106a, 106b of the front wall panel 102 and the attachment flaps 106a, 106b of the back wall panel 104 have a respective length, along the transverse second direction Y in an unfolded state, such that there is no overlap of the attachment flaps 106a, 106b of the front wall panel 102 and the attachment flaps 106a, 106b of the back wall panel 104. As a result of this length condition, the opposing side walls 206 of the wrap around package 200 will have a respective through-going opening 207. By this length condition, the amount of package material may be reduced. As a result thereof, the attachment flaps 106a, 106b of the front wall 202 and the back wall 204 will be in level with each other. The same applies to the attachment flaps 106a, 106b of the top wall 203 and bottom wall 201. Thereby, there is a reduced risk of entanglement with e.g. adjacent packages. Also, the risk of rupture in any adhesively joined overlap joints due to inherent tensions will be reduced. As yet another advantage, the through-going openings 207 facilitate dis-mounting of the package 200 since the opening provides a good grip when tearing the package.

Alternatively, in a non-disclosed embodiment, the opposing edges of the attachment flaps 106a, 106b of the top and bottom walls 203, 201, and the opposing edges of the attachment flaps 106a, 106b of the front and back walls 202, 204 may abut each other.

Now turning to Figs 2 and 3. The upper rim portion UR of the front wall panel 102 and the forward rim portion FR of the top wall panel 103 are interconnected along the fold line FLY that extends between the front wall panel 102 and the top wall panel 103. By this configuration, the wrap around package 200 comprises two separate through-going openings 205a, 205b, i.e. one in the front wall 202 and one in the top wall 203. As given above, either of the upper and front rim portions UR; FR may be omitted.

The fold line FLY extending between the forward rim portion FR and the upper rim portion UR may be provided by a perforation P forming a tear line. The perforation P may allow the forward rim portion FR and/or the upper rim portion UR to be selectively removed by tearing. To further facilitate tearing and removal of one or both of the forward rim portion FR and the upper rim portion UR, the interface between the left and right hand rims LHR2, RHR2 and the forward rim portion FR and/or between the left and right hand rims LHR1, RHR1 and the upper rim portion UR is provided with a perforation P forming a tear line. Fig. 3 schematically illustrates removal of the upper rim portion UR and the forward rim portion FR as one integral unit to thereby form one single opening 205 that extends from the front wall 202 to the top wall 203.

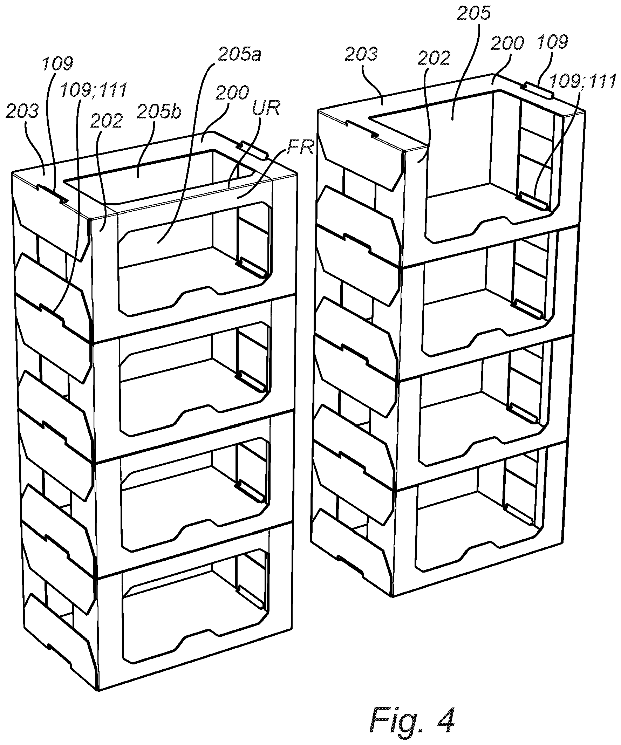

As is best seen in Fig. 2, when the blank 100 has been folded to form the wrap around package 200, the rectangular cut-outs 110 will form a through-going opening 111 bridging the bottom wall 201 and the respective side wall 206. Also, the U-shaped cut-outs 108 will form vertically standing tongues 109 facing away from the top wall 203. Turning to Figs. 4 and 5 disclosing stacks of wrap around packages 200, it can be shown that the tongues 109 will engage the rectangular through-going holes 111, thereby providing a guiding effect. Also, the tongues 109 and through-going holes 111 will contribute to the overall stability of the stack of wrap around packages 200.

Now turning to Fig. 4, two stacks of wrap around packages 200 are shown. In the left hand stack, the individual wrap around packages 200 are provided with two through-going openings 205a, 205b each - one in the front wall 202 and one in the top wall 203. In the right hand stack, the individual packages 200 are provided with one single through-going opening 205 extending from the front wall 202 to the top wall 203. This single through-going opening 205 is provided by removal of the upper rim portion UR and the front rim portion FR. Such removal may be postponed until the wrap around packages 200 are presented to customers in e.g. a store.

It is to be understood that only one of the upper rim portion UR or the front rim portion FR may be removed. Thereby the remaining upper and front rim portions UR, FR will add to the robustness of a stack of wrap around packages 200 during handling, storing and transportation of a pallet. The provision of the front and upper rim portions FR, UR will also add to the torsional rigidity of the wrap around package and also allow a higher compression force without collapsing. Also, it will increase the rigidity of the blank 100 as a whole during handling.

## Claims

1. Wrap around package (200) formed of a blank (100) comprising four major panels (A1-A4) connected one after another along a first direction (X), wherein the four major panels (A1-A4) are foldable relative to each other about fold lines (FLY) extending transverse to the first direction (X) in order to form a bottom wall panel (101), a back wall panel (104), a top wall panel (103) and a front wall panel (102) configured to form a bottom wall (201), a back wall (204), a top wall (203) and a front wall (202), respectively, of the wrap around package (200)
wherein each of the four major panels (A1-A4) is provided with a first attachment flap (106a) on a first transverse side edge of the respective major panel (A1-A4) and a second attachment flap (106b) on a second transverse side, opposite the first side edge, of the respective major panel (A1-A4)
wherein each attachment flap (106a; 106b) is foldable relative to the respective major panel (A1-A4) about a respective fold line (FLX) extending along the first direction (X),
wherein each first attachment flap (106a) of a respective major panel (A1, A3) is configured to partly overlap and be attached to the first attachment flaps (106a) of the respective two neighbouring major panels (A2, A4),
wherein each second attachment flap (106b) of a respective major panel (A1, A3) is configured to partly overlap and be attached to the second attachment flaps (106b) of the respective two neighbouring major panels (A2, A4),
wherein the major panel (A2) configured to form the front wall panel (102) of the wrap around package (200) is provided with a left hand rim portion (LHR1) extending from the top wall panel (103) to the bottom wall panel (101), a right hand rim portion (RHR2) extending from the top wall panel (103) to the bottom wall panel (101), and a lower rim portion (LR) extending along the bottom wall panel (101) and extending from the left hand rim portion (LHR1) to the right hand rim portion (RHR1), wherein the left hand rim portion (LHR1), the lower rim portion (LR) and the right hand rim portion (RHR1) together form a front wall rim (FWR) defining a through-going opening (105a) in the front wall panel (102), and
wherein the major panel (A1) configured to form the top wall panel (103) of the wrap around package (200) is provided with a left hand rim portion (LHR2) extending from the back wall panel (104) to the front wall panel (102), a right hand rim portion (RHR2) extending from the back wall panel (104) to the front wall panel (102), and a rear rim portion (RR) extending along the back wall panel (104) and extending from the left hand rim portion (LHR2) to the right hand rim portion (RHR2), wherein the left hand rim portion (LHR2), the rear rim portion (RR) and the right hand rim portion (RHR2) together form a top wall rim (TWR) defining a through-going opening (105b) in the top wall panel (103),
**characterised in that**
the major panel (A2) configured to form the front wall panel (102) further comprises a removable upper rim portion (UR) extending from a left hand tear line formed in an interface between the removable upper rim portion (UR) and the left hand rim portion (LHR1) to a right hand tear line formed in an interface between the upper rim portion (UR) and the right hand rim portion (RHR1) of the front wall panel (102),
wherein the upper rim portion (UR) forms part of the front wall rim (FWR) defining the through-going opening (105a) in the front wall panel (102) and is configured to be removed to form a single through-going opening (205) in the front wall (202) and the top wall (203), and/or
the major panel (A1) configured to form the top wall panel (103) further comprises a removable forward rim portion (FR) extending from a left hand tear line formed in an interface between the forward rim portion (FR) and the left hand rim portion (LHR2) to a right hand tear line formed in an interface between the forward rim portion (FR) and the right hand rim portion (RHR2) of the top wall panel (103),
wherein the forward rim portion (FR) forms part of the top wall rim (TWR) defining the through-going opening (105b) in the top wall panel (103) and is configured to be removed to form said/a single through-going opening (205) in the front wall (202) and the top wall (203).

2. Wrap around package according to claim 1 comprising said upper rim portion (UR) and said forward rim portion (FR), wherein the upper rim portion (UR) of the front wall panel (102) and the forward rim portion (FR) of the top wall panel (103) are interconnected, and preferably integrally formed, along a fold line (FLY) between the front wall panel (102) and the top wall panel (103).

3. Wrap around package according to any one of claims 1-2, wherein the attachment flaps (106a; 106b) of the top wall panel (103) and the attachment flaps (106a; 106b) of the bottom wall panel (101) have a respective length, along the transverse direction as seen in an unfolded state, such that there is no overlap of the attachment flaps (106a; 106b) of the top wall panel (103) and the attachment flaps (106a; 106b) of the bottom wall panel (101).

4. Wrap around package according to any one of claims 1-3, wherein the attachment flaps (106a; 106b) of the front wall panel (102) and the attachment flaps (106a; 106b) of the back wall panel (104) have a respective length, along the transverse direction as seen in an unfolded state, such that there is no overlap of the attachment flaps (106a; 106b) of the front wall panel (102) and the attachment flaps (106a; 106b) of the back wall panel (104).

5. Wrap around package according to any one of claims 1-4, wherein the blank (100) further comprises an attachment panel (107) arranged to extend in line with the four major panels (A1-A4) as seen along the first direction (X).

## Patentansprüche

1. Umschlagsverpackung (200), die aus einem Zuschnitt (100) gebildet ist, der vier Hauptfelder (A1-A4) umfasst, die nacheinander entlang einer ersten Richtung (X) verbunden sind, wobei die vier Hauptfelder (A1-A4) relativ zueinander um Faltlinien (FLY) faltbar sind, die sich quer zu der ersten Richtung (X) erstrecken, um ein Bodenwandfeld (101), ein Rückwandfeld (104), ein Deckwandfeld (103) und ein Stirnwandfeld (102) zu bilden, die so konfiguriert sind, dass sie jeweils eine Bodenwand (201), eine Rückwand (204), eine Deckwand (203) und eine Stirnwand (202) der Umschlagsverpackung (200) bilden,
wobei jedes der vier Hauptfelder (A1-A4) mit einer ersten Befestigungsklappe (106a) an einer ersten Querseitenkante des jeweiligen Hauptfelds (A1-A4) und einer zweiten Befestigungsklappe (106b) an einer der ersten Seitenkante gegenüberliegenden zweiten Querseite des jeweiligen Hauptfelds (A1-A4) versehen ist,
wobei jede Befestigungsklappe (106a; 106b) relativ zu dem jeweiligen Hauptfeld (A1-A4) um eine jeweilige Faltlinie (FLX) faltbar ist, die sich entlang der ersten Richtung (X) erstreckt,
wobei jede erste Befestigungsklappe (106a) eines jeweiligen Hauptfelds (A1, A3) so konfiguriert ist, dass sie die ersten Befestigungsklappen (106a) der jeweiligen zwei benachbarten Hauptfelder (A2, A4) teilweise überlappt und daran befestigt ist,
wobei jede zweite Befestigungsklappe (106b) eines jeweiligen Hauptfelds (A1, A3) so konfiguriert ist, dass sie die zweiten Befestigungsklappen (106b) der jeweiligen zwei benachbarten Hauptfelder (A2, A4) teilweise überlappt und daran befestigt ist,
wobei das Hauptfeld (A2), das so konfiguriert ist, dass es das Stirnwandfeld (102) der Umschlagsverpackung (200) bildet, mit einem linken Randabschnitt (LHR1), der sich von dem Deckwandfeld (103) zu dem Bodenwandfeld (101) erstreckt, einem rechten Randabschnitt (RHR2), der sich von dem Deckwandfeld (103) zu dem Bodenwandfeld (101) erstreckt, und einem unteren Randabschnitt (LR), der sich entlang des Bodenwandfelds (101) erstreckt und sich von dem linken Randabschnitt (LHR1) zu dem rechten Randabschnitt (RHR1) erstreckt, versehen ist, wobei der linke Randabschnitt (LHR1), der untere Randabschnitt (LR) und der rechte Randabschnitt (RHR1) zusammen einen Stirnwandrand (FWR) bilden, der eine durchgehende Öffnung (105a) in dem Stirnwandfeld (102) definiert, und
wobei das Hauptfeld (A1), das so konfiguriert ist, dass es das Deckwandfeld (103) der Umschlagsverpackung (200) bildet, mit einem linken Randabschnitt (LHR2), der sich von dem Rückwandfeld (104) zu dem Stirnwandfeld (102) erstreckt, einem rechten Randabschnitt (RHR2), der sich von dem Rückwandfeld (104) zu dem Stirnwandfeld (102) erstreckt, und einem hinteren Randabschnitt (RR), der sich entlang des Rückwandfelds (104) erstreckt und sich von dem linken Randabschnitt (LHR2) zu dem rechten Randabschnitt (RHR2) erstreckt, versehen ist, wobei der linke Randabschnitt (LHR2), der hintere Randabschnitt (RR) und der rechte Randabschnitt (RHR2) zusammen einen Deckwandrand (TWR) bilden, der eine durchgehende Öffnung (105b) in dem Deckwandfeld (103) definiert,
**dadurch gekennzeichnet, dass**
das Hauptfeld (A2), das so konfiguriert ist, dass es das Stirnwandfeld (102) bildet, ferner einen entfernbaren oberen Randabschnitt (UR) umfasst, der sich von einer linken Reißlinie, die in einer Schnittstelle zwischen dem entfernbaren oberen Randabschnitt (UR) und dem linken Randabschnitt (LHR1) gebildet ist, zu einer rechten Reißlinie, die in einer Schnittstelle zwischen dem oberen Randabschnitt (UR) und dem rechten Randabschnitt (RHR1) des Stirnwandfelds (102) gebildet ist, erstreckt, wobei der obere Randabschnitt (UR) einen Teil des Stirnwandrands (FWR) bildet, der die durchgehende Öffnung (105a) in dem Stirnwandfeld (102) definiert, und so konfiguriert ist, dass er entfernt werden kann, um eine einzige durchgehende Öffnung (205) in der Stirnwand (202) und der Deckwand (203) zu bilden, und/oder
das Hauptfeld (A1), das so konfiguriert ist, dass es das Deckwandfeld (103) bildet, ferner einen entfernbaren vorderen Randabschnitt (FR) umfasst, der sich von einer linken Reißlinie, die in einer Schnittstelle zwischen dem vorderen Randabschnitt (FR) und dem linken Randabschnitt (LHR2) gebildet ist, zu einer rechten Reißlinie, die in einer Schnittstelle zwischen dem vorderen Randabschnitt (FR) und dem rechten Randabschnitt (RHR2) des Deckwandfelds (103) gebildet ist, erstreckt, wobei der vordere Randabschnitt (FR) einen Teil des Deckwandrands (TWR) bildet, der die durchgehende Öffnung (105b) in dem Deckwandfeld (103) definiert, und so konfiguriert ist, dass er entfernt werden kann, um die/eine einzelne durchgehende Öffnung (205) in der Stirnwand (202) und der Deckwand (203) zu bilden.

2. Umschlagsverpackung nach Anspruch 1, die den oberen Randabschnitt (UR) und den vorderen Randabschnitt (FR) umfasst, wobei der obere Randabschnitt (UR) des Stirnwandfelds (102) und der vordere Randabschnitt (FR) des Deckwandfelds (103) entlang einer Faltlinie (FLY) zwischen dem Stirnwandfeld (102) und dem Deckwandfeld (103) miteinander verbunden und vorzugsweise einstückig ausgebildet sind.

3. Umschlagsverpackung nach einem der Ansprüche 1-2, wobei die Befestigungsklappen (106a; 106b) des Deckwandfelds (103) und die Befestigungsklappen (106a; 106b) des Bodenwandfelds (101), in einem ungefalteten Zustand betrachtet, eine jeweilige Länge entlang der Querrichtung aufweisen, sodass es keine Überlappung der Befestigungsklappen (106a; 106b) des Deckwandfelds (103) und der Befestigungsklappen (106a; 106b) des Bodenwandfelds (101) gibt.

4. Umschlagsverpackung nach einem der Ansprüche 1-3, wobei die Befestigungsklappen (106a; 106b) des Stirnwandfelds (102) und die Befestigungsklappen (106a; 106b) des Rückwandfelds (104), in einem ungefalteten Zustand betrachtet, eine jeweilige Länge entlang der Querrichtung aufweisen, sodass es keine Überlappung der Befestigungsklappen (106a; 106b) des Stirnwandfelds (102) und der Befestigungsklappen (106a; 106b) des Rückwandfelds (104) gibt.

5. Umschlagsverpackung nach einem der Ansprüche 1-4, wobei der Zuschnitt (100) ferner ein Befestigungsfeld (107) umfasst, das so angeordnet ist, dass es sich, bei Betrachtung entlang der ersten Richtung (X), in einer Linie mit den vier Hauptfeldern (A1-A4) erstreckt.

## Revendications

1. Emballage enveloppant (200) formé d'une découpe (100) comprenant quatre panneaux principaux (Al à A4) reliés les uns après les autres le long d'une première direction (X), dans lequel les quatre panneaux principaux (Al à A4) sont pliables les uns par rapport aux autres autour de lignes de pliage (FLY) s'étendant transversalement à la première direction (X) afin de former un panneau de paroi de fond (101), un panneau de paroi de dos (104), un panneau de paroi de sommet (103) et un panneau de paroi avant (102) configurés pour former une paroi de fond (201), une paroi de dos (204), une paroi de sommet (203) et une paroi avant (202), respectivement, de l'emballage enveloppant (200),
dans lequel chacun des quatre panneaux principaux (Al à A4) est muni d'un premier rabat de fixation (106a) sur un premier bord de côté transversal du panneau principal (Al à A4) respectif et d'un deuxième rabat de fixation (106b) sur un deuxième côté transversal, opposé au premier bord de côté, du panneau principal (Al à A4) respectif,
dans lequel chaque rabat de fixation (106a ; 106b) est pliable par rapport au panneau principal (Al à A4) respectif autour d'une ligne de pliage (FLX) respective s'étendant le long de la première direction (X),
dans lequel chaque premier rabat de fixation (106a) d'un panneau principal (A1, A3) respectif est configuré pour chevaucher partiellement les premiers rabats de fixation (106a) des deux panneaux principaux (A2, A4) voisins respectifs et être fixé à ceux-ci,
dans lequel chaque deuxième rabat de fixation (106b) d'un panneau principal (A1, A3) respectif est configuré pour chevaucher partiellement les deuxièmes rabats de fixation (106b) des deux panneaux principaux (A2, A4) voisins respectifs et être fixé à ceux-ci,
dans lequel le panneau principal (A2) configuré pour former le panneau de paroi avant (102) de l'emballage enveloppant (200) est muni d'une partie de rebord gauche (LHR1) s'étendant du panneau de paroi de sommet (103) au panneau de paroi de fond (101), d'une partie de rebord droit (RHR2) s'étendant du panneau de paroi de sommet (103) au panneau de paroi de fond (101), et d'une partie de rebord inférieur (LR) s'étendant le long du panneau de paroi de fond (101) et s'étendant de la partie de rebord gauche (LHR1) à la partie de rebord droit (RHR1), dans lequel la partie de rebord gauche (LHR1), la partie de rebord inférieur (LR) et la partie de rebord droit (RHR1) forment ensemble un rebord de paroi avant (FWR) définissant une ouverture traversante (105a) dans le panneau de paroi avant (102), et
dans lequel le panneau principal (A1) configuré pour former le panneau de paroi de sommet (103) de l'emballage enveloppant (200) est muni d'une partie de rebord gauche (LHR2) s'étendant du panneau de paroi de dos (104) au panneau de paroi avant (102), d'une partie de rebord droit (RHR2) s'étendant du panneau de paroi de dos (104) au panneau de paroi avant (102), et d'une partie de rebord arrière (RR) s'étendant le long du panneau de paroi de dos (104) et s'étendant de la partie de rebord gauche (LHR2) à la partie de rebord droit (RHR2), dans lequel la partie de rebord gauche (LHR2), la partie de rebord arrière (RR) et la partie de rebord droit (RHR2) forment ensemble un rebord de paroi de sommet (TWR) définissant une ouverture traversante (105b) dans le panneau de paroi de sommet (103),
**caractérisé en ce que**
le panneau principal (A2) configuré pour former le panneau de paroi avant (102) comprend en outre une partie de rebord supérieur amovible (UR) s'étendant d'une ligne de déchirure gauche formée dans une interface entre la partie de rebord supérieur amovible (UR) et la partie de rebord gauche (LHR1) à une ligne de déchirure droite formée dans une interface entre la partie de rebord supérieur (UR) et la partie de rebord droit (RHR1) du panneau de paroi avant (102), dans lequel la partie de rebord supérieur (UR) fait partie du rebord de paroi avant (FWR) définissant l'ouverture traversante (105a) dans le panneau de paroi avant (102) et est configurée pour être retirée afin de former une ouverture traversante unique (205) dans la paroi avant (202) et la paroi de sommet (203), et/ou
le panneau principal (A1) configuré pour former le panneau de paroi de sommet (103) comprend en outre une partie de rebord avant amovible (FR) s'étendant d'une ligne de déchirure gauche formée dans une interface entre la partie de rebord avant (FR) et la partie de rebord gauche (LHR2) à une ligne de déchirure droite formée dans une interface entre la partie de rebord avant (FR) et la partie de rebord droit (RHR2) du panneau de paroi de sommet (103), dans lequel la partie de rebord avant (FR) fait partie du rebord de paroi de sommet (TWR) définissant l'ouverture traversante (105b) dans le panneau de paroi de sommet (103) et est configurée pour être retirée afin de former ladite/une ouverture traversante unique (205) dans la paroi avant (202) et la paroi de sommet (203) .

2. Emballage enveloppant selon la revendication 1, comprenant ladite partie de rebord supérieur (UR) et ladite partie de rebord avant (FR), dans lequel la partie de rebord supérieur (UR) du panneau de paroi avant (102) et la partie de rebord avant (FR) du panneau de paroi de sommet (103) sont reliées entre elles, et de préférence formées d'un seul tenant, le long d'une ligne de pliage (FLY) entre le panneau de paroi avant (102) et le panneau de paroi de sommet (103).

3. Emballage enveloppant selon l'une quelconque des revendications 1 et 2, dans lequel les rabats de fixation (106a ; 106b) du panneau de paroi de sommet (103) et les rabats de fixation (106a ; 106b) du panneau de paroi de fond (101) ont une longueur respective, le long de la direction transversale vus dans un état déplié, de sorte qu'il n'y ait pas de chevauchement des rabats de fixation (106a ; 106b) du panneau de paroi de sommet (103) et des rabats de fixation (106a ; 106b) du panneau de paroi de fond (101).

4. Emballage enveloppant selon l'une quelconque des revendications 1 à 3, dans lequel les rabats de fixation (106a ; 106b) du panneau de paroi avant (102) et les rabats de fixation (106a ; 106b) du panneau de paroi de dos (104) ont une longueur respective, le long de la direction transversale vus dans un état déplié, de sorte qu'il n'y ait pas de chevauchement des rabats de fixation (106a ; 106b) du panneau de paroi avant (102) et des rabats de fixation (106a ; 106b) du panneau de paroi de dos (104).

5. Emballage enveloppant selon l'une quelconque des revendications 1 à 4, dans lequel la découpe (100) comprend en outre un panneau de fixation (107) agencé pour s'étendre en ligne avec les quatre panneaux principaux (Al à A4), vu le long de la première direction (X).
